# EUROPÄISCHE PATENTSCHRIFT

(11) **EP 4 194 366 B1**
(45) Veröffentlichungstag und Bekanntmachung des Hinweises auf die Patenterteilung: **04.02.2026**
(21) Anmeldenummer: 22212028.9
(22) Anmeldetag: 07.12.2022
(51) Int. Cl.: B65G 1/04, B65G 1/137, G06Q 10/087

(54) **SYSTEM UND VERFAHREN ZUR ABARBEITUNG EINER VIELZAHL VON KOMMISSIONIERAUFTRÄGEN MIT MEHREREN ARTIKELN**
SYSTEM AND METHOD FOR PROCESSING A MULTIPLICITY OF PICKING ORDERS WITH A PLURALITY OF ARTICLES
SYSTÈME ET PROCÉDÉ DE TRAITEMENT D'UNE PLURALITÉ DE COMMANDES DE PRÉPARATION DE COMMANDES COMPRENANT PLUSIEURS ARTICLES

(30) Priorität: 09.12.2021 DE 102021132568
(43) Veröffentlichungstag der Anmeldung: 14.06.2023
(73) Patentinhaber: Dematic GmbH, 63150 Heusenstamm (DE)
(72) Erfinder: Wolff, Thomas, 48161 Münster (DE); Felker, Juri, 65189 Wiesbaden (DE)
(74) Vertreter: Moser Götze & Partner Patentanwälte mbB

(56) Entgegenhaltungen:
- EP-A1- 2 789 555
- DE-A1- 102018 221 043
- DE-B3- 102011 104 511
- DE-B3- 102011 116 081

## Beschreibung

Die Erfindung betrifft ein System und ein Verfahren zur Abarbeitung einer Vielzahl von Kommissionieraufträgen mit mehreren Artikeln nach Anspruch 1.

EP 2 789 555 A1 offenbart eine Vorrichtung zum auftragsorientierten Bereitstellen von Einzelwaren für mehrere Aufträge aus einem Warenlager, die mindestens einen mit einem Warenlager verbundenen Zwischenspeicher zum Zwischenspeichern von Einzelwaren mindestens eines Auftrags, jeweils einen mit dem mindestens einen Zwischenspeicher verbundenen Sammelbereich zum Sammeln der Einzelwaren des mindestens einen komplettierten Auftrags und mehrere Abgabelinien aufweisenden Trennbereich zum auftragsorientierten Bereitstellen der Einzelwaren des mindestens einen komplettierten Auftrags umfasst. Es werden also Artikel fest Aufträgen zugeordnet und anschließend aufgrund dieser eine Steuerung der Vorrichtung durchgeführt.

DE 10 2011 104 511 B3 offenbart ein System und Verfahren zur Abarbeitung einer Vielzahl von Kommissionieraufträgen mit jeweils mehreren Artikeln mit einem Nachschublager für Artikel,mit einem Pufferspeicher umfassend eine Vielzahl von parallelen Speichern für die Hängetransportmittel, und mit einer zentralen Steuerung, die eingerichtet ist, jedem Speicher eine Vielzahl von zu kommissionierenden Aufträgen zuzuordnen und eine Gesamtliste aller Artikel und deren Menge je Speicher aus diesen Aufträgen zu erstellen und die darin enthaltenen Artikel anhand der Gesamtliste dem jeweiligen Speicher zuzuführen, wobei die Hängetransportmittel in den jeweiligen Speicher eingeschleust werden,wobei die Steuerung eingerichtet ist, um regelmäßig jeden Speicher daraufhin zu überprüfen, ob a) alle Artikel zur Erfüllung eines ursprünglichen Auftrags enthalten sind und ob b) alle Artikel zur Erfüllung eines vorzuziehenden anderen Auftrags bereits im Speicher enthalten sind. Demgegenüber besteht die Aufgabe der vorliegenden Erfindung darin, eine flexiblere Alternative zur Abarbeitung der Kommissionieraufträge bereitzustellen.

Diese Aufgabe wird durch das in Anspruch 1 wiedergegebene System bzw. Verfahren nach Anspruch 8 gelöst. Vorteilhafte Ausgestaltungen ergeben sich aus den Unteransprüchen und der Beschreibung.

Erfindungsgemäß ist erkannt worden, dass mit einem System nach Anspruch 1 bzw. dem Verfahren nach Anspruch 8, eine flexiblere Alternative zur Abarbeitung der Kommissionieraufträge und daher eine schnellere Abarbeitung möglich ist, da es eine bevorzugte Behandlung von Aufträgen höherer Priorität ermöglicht.

Dies ist insbesondere der Fall, da eine zentralen Steuerung eingerichtet ist, jedem Umlaufspeicher eine Vielzahl von zu kommissionierenden Aufträgen zuzuordnen und eine Gesamtliste aller Artikel und deren Menge je Umlaufspeicher aus diesen Aufträgen zu erstellen und die darin enthaltenen Artikel anhand der Gesamtliste dem jeweiligen Umlaufspeicher zuzuführen, wobei die Hängetaschen über eine Weiche in den jeweiligen Umlaufspeicher eingeschleust werden, und diese zentrale Steuerung auch eingerichtet ist, um regelmäßig jeden Umlaufspeicher daraufhin zu überprüfen, ob a) alle Artikel zur Erfüllung eines ursprünglichen Auftrags enthalten sind und daraufhin die Weiche am Ausgang mit Hilfe der dortigen Artikelidentifikationseinrichtung zur Ausschleusung der Artikel des Auftrags ansteuert, und ob b) alle Artikel zur Erfüllung eines vorzuziehenden anderen Auftrags bereits im Umlaufspeicher enthalten sind und daraufhin die Weiche am Ausgang mit Hilfe der dortigen Artikelidentifikationseinrichtung zur Ausschleusung der Artikel dieses anderen Auftrags ansteuert und ob c) alle Artikel zur Erfüllung eines vorzuziehenden anderen Auftrags bereits in zwei oder mehr Umlaufspeicher verteilt enthalten sind und daraufhin die Weichen am Ausgang der jeweiligen Umlaufspeicher mit Hilfe der dortigen Artikelidentifikationseinrichtungen zur Ausschleusung der Artikel dieses anderen Auftrags ansteuert.

Es wird also im Unterschied zum Stand der Technik der Pufferspeicher nicht rein nach festzugeordneten Aufträgen mit Artikeln gefüllt, sondern nach flexibleren Gesamtlisten und die in den Umlaufspeichern des Pufferspeichers bereits vorhandenen Artikel variabel in der Auftragszuordnung bei Bedarf geändert und für abweichende eiligere Aufträge umgewidmet. Durch diese weiche Zuordnung ist eine flexiblere Abarbeitung der Kommissionieraufträge möglich.

Für den hängenden Transport geeignete Hängetransportmittel sind beispielsweise Hängetaschen oder Kleiderbügel und dergleichen. Vorzugsweise werden die Artikel einzeln darin bzw. darauf transportiert.

Das Gesamtsystem umfasst mindestens ein Nachschublager, das mit mindestens einer Umladestation zur Umladung für den hängenden Transport verbunden ist.

Die Verbindung erfolgt vorzugsweise über eine Fördertechnik, die an die Art der Lagerung der Artikel im Nachschublager angepasst ist. Dies kann z. B. ein Rollenförderer oder Bandförderer sein. Meist wird das Nachschublager ein Behälterlager oder Tablarlager sein.

Die Umladestation ist wiederum mit dem Pufferspeicher verbunden. Hier bietet sich vorzugsweise eine umlaufende Hängeförderstrecke an, von der die parallelen Umlaufspeicher abzweigen bzw. über die Weichen verbunden sind. Die Hängeförderstrecke ist vorzugsweise eine Hängeförderstrecke mit einem Kettenantrieb, die über Mitnehmer/Adapter Hängefördertaschen oder direkt Kleiderbügel bewegt, wie dies z. B. in EP 2 886 494 A1 und EP 3 480 142 A1 beschrieben ist.

Hängetaschen (oft auch Transporttaschen genannt) sind vorzugsweise solche, wie sie EP 3 442 884 A1 beschrieben sind. Daneben kommen auch solche wie sie beispielsweise aus der EP 2 130 968 B1 bekannt sind in Frage.

Generell umfassen die Hängetaschen zwei Taschenwände, die an einem oberen Ende über einen Bügel miteinander verbunden sind, an dem eine Einhängevorrichtung zum Einhängen in eine Schiene einer Fördervorrichtung oder in einen Adapter, der wiederum in einer Schiene läuft, dient. Die Taschenwände können unten fest verbunden sein, also z. B. eine Schlaufe ausbilden. Seitlich können die Taschen ebenfalls geschlossen sein. Meist wird jeweils nur ein Artikel pro Hängetasche transportiert.

Die Umladestation zur Umladung von Artikeln für den hängenden Transport ist eine manuelle und/oder automatisierte bzw. vollautomatische Induktionsstation, in der die Artikel aus dem Nachschublager vorzugsweise einzeln in Hängetaschen umgeladen werden, die bereits im Hängeförderer eingehakt sind, oder in der die Artikel aus dem Nachschublager mittels Kleiderbügeln eingehakt werden. Dies ist beispielweise aus EP 3 442 884 A1 bzw. Dürkopp EP 2 196 415 A1 bekannt.

Vorzugsweise ist jede Umladestation mit jeweils einer Gasse des Nachschublagers verbunden. Es ist aber auch möglich, bei einer höheren Durchsatzleistung der Umladestationen, beispielsweise durch höhere Automatisierung oder Doppelbetrieb durch zwei Kommissionierer, zwei Gassen an jede Umladestation anzubinden.

Die zentrale Steuerung ist eingerichtet, jedem Umlaufspeicher eine Vielzahl von zu kommissionierenden Aufträgen zuzuordnen und eine Gesamtliste aller Artikel und deren Menge je Umlaufspeicher aus diesen Aufträgen zu erstellen und die darin enthaltenen Artikel anhand der Gesamtliste dem jeweiligen Umlaufspeicher zuzuführen, wobei die Hängetaschen dazu über eine Weiche in den jeweiligen Umlaufspeicher eingeschleust werden. Vorzugsweise ist die zentrale Steuerung ein Lagerverwaltungssystem (WMS), in dem alle notwendigen Prozesse abgebildet sind, wie Lagerstruktur, Stammdatenverwaltung, Bestandsverwaltung, Transportverwaltung, lagerinterne Prozesse (Umlagerung, Nachschub, Umbuchung, Leitstand), Wareneingang (Avisierung, Vereinnahmung, Dekonsolidierung, Qualitätsprüfung, Einlagerung), Warenausgang (Auftragsverwaltung, Kommissionierung, Konsolidierung, Verpackung, Versand) usw.

Vorzugsweise ist die zentrale Steuerung auch eingerichtet, um Artikel erfüllter bzw. ausgeschleuster Aufträge von der Gesamtliste des jeweiligen Umlaufspeichers zu streichen.

Vorzugsweise ist die zentrale Steuerung auch eingerichtet, um Aufträge bei der Abarbeitung vorzuziehen, die eine höhere oder heraufgesetzte Priorität besitzen und/oder der vorzuziehende andere Auftrag nicht auf der ursprünglichen Gesamtliste enthalten ist.

Es ist sinnvoll, wenn die zentrale Steuerung eingerichtet ist, beim Einschleusen von Artikeln regelmäßig den Umlaufspeicher zu überprüfen, d. h. mit jedem Einschleusungsvorgang eine Prüfung auf die obigen Kriterien a, b und c durchzuführen.

Bei dem Nachschublager handelt es sich um ein "schnelles" System, das in der Lage sein soll die nachgefragten Artikel innerhalb von 5-15 min auszulagern bzw. nachzuschieben. Meist werden hierzu automatische Kleinteilelager (AKL) für Behälter mit Regalbediengeräten verwendet. Insbesondere solche mit Einebenenregalbediengeräten, wie Shuttles, in denen in praktisch jeder Gasse und Ebene jeweils ein Einebenenregalbediengerät zum Ein- und Auslagern fährt.

Aus der eigenen EP 1 964 792 B1 ist z. B. ein Lager zum Bereitstellen von Transporteinheiten aus einem Lager in einer gewünschten Reihenfolge auf mindestens einer Sammelstrecke bekannt. Dabei werden Regalbediengeräte in jeder/jedem Lagerregalgasse, Auslagerlift und Auslagerbahn aufeinander derart abgestimmt gesteuert und mit Gütern beaufschlagt, dass diese letztendlich sortiert auf der Sammelstrecke enden bzw. von dieser abgegeben werden, das sich als Nachschublager eignet.

Vorzugsweise ist das Nachschublager ein solches Lager mit Einebenenregalbediengeräten als Regalbediengeräte, die in den Gassen zwischen den Regalen laufen, wobei die Regale doppelt- oder mehrfachtiefe Regale sind, die Rückenan-Rücken stehen, was insgesamt als Shuttle-Lager bezeichnet werden soll.

Besonders bevorzugt ist es, wenn die Einebenenregalbediengeräte in jeder Gasse und in jeder Ebene fahren. Zudem ist es sinnvoll, wenn die vertikalen Transferlifte für die Ein- und Auslagerung der Artikel über benachbarte Förderer entkoppelt sind, wie dies auch in EP 2 794 430 A1 beschrieben ist.

Wenn nötig kann ein Behälteraustausch in Querrichtung (über die Gassen) durch eine konventionelle Fördertechnik (Querförderer oder Förderschleife) in der Vorzone und/oder über einen Quertransport stattfinden, wie er z. B. in EP 2 741 977 A1 oder EP 3 606 846 A1 beschrieben ist.

Mit der Verwendung des Shuttle-Lagers als Nachschublager können die Umladestationen voll ausgelastet werden, was zusammen mit dem Verzicht auf eine Sequenzierung die gewünschten kurzen Bereitstellungszeiten von maximal 15 - 20 Minuten aller Artikel eines Auftrags im Pufferspeicher bzw. Umlaufspeicher erreicht. Erst im Pufferspeicher bzw. Umlaufspeicher werden dann die Artikel eines Auftrags konsolidiert. Diese Zeit ergibt sich aus der Dynamik des Shuttle-Lagers, an dem die Umladestationen angebunden sind. Um die Umladestationen kontinuierlich mit Lagerbehältern versorgen zu können, wird eine bestimme "Arbeitslast" an aktiven Aufträgen benötigt. Erfahrungsgemäß beträgt sie 15-20 min bei einem Shuttle-Lager.

Das Nachschublager kann mit artikelreinen Behältern und auch mit gemischten Artikel-Behältern versorgt werden.

Besonders vorteilhaft ist es, wenn das Nachschublager selbst aus einem (weiteren) zentralen Lager mit gemischten Behältern versorgt wird. Insbesondere ist es von Vorteil, wenn dabei hinsichtlich Artikeln unterschiedlicher Aufträge gemischte Behälter bereitgestellt werden, um das Nachschublager zu versorgen. Diese werden aus dem zentralen Lager bereitgestellt, in dem ein Kommissionierer manuell auftragsorientiert Behälter gemischt mit unterschiedlichen Artikeln mehrerer Aufträge füllt, die entweder Einzelartikelaufträge sind oder Aufträge sind, die gemeinsam innerhalb von jeweils ca. 15-min-Slots zur Abarbeitung vorgesehen sind. Dabei bewegen sich mehrere Kommissionierer parallel durch das zentrale Lager und befüllen in ihrer Zone jeweils mitgeführte gemischte Behälter (Mini-Batches), die jeweils einem Slot oder Zeitabschnitt einer vorgesehenen Abarbeitungszeit (ca. 1h in der Zukunft) zugeteilt sind.

Diese gemischten Behälter werden dann ins Nachschublager, insbesondere Shuttle-Lager, zur Pufferung/Zwischenspeicherung bzw. Konsolidierung und Versorgung der Umladestation eingespeist.

Das Nachschublager wird also mit gemischten Mini-Batches gefüttert. Ein Mini Batch besteht also aus einem oder mehreren Ladungsträgern, die einem gemeinsamen Auslager-Zeitfenster aus dem Nachschublager zugeordnet sind. Die in einem oder mehreren Ladungsträgern befindlichen Artikel sind für unterschiedliche Aufträge. Dabei ist es bevorzugt, wenn die Anzahl der darin enthaltenen Artikel so gewählt wird, dass sie der Geschwindigkeit eines automatischen Nachschublagers (z. B. Shuttle-Lager) entspricht und eine noch schnelle Bereitstellung von Artikeln erlaubt. Diese gemischten Behälter werden, im Gegensatz zu artikelreinen Behältern, immer in den Umlagestationen komplett geleert bzw. umgeladen und gelangen über einen Kreislauf entweder zurück ins zentrale Lager und/oder zum Wareneingangsbereich zur Wiederverwendung.

Artikelreine Behälter für das Nachschublager werden parallel von einem Wareneingangsbereich bereitgestellt. Diese werden an den Umladestationen, wenn nicht entleert, nach Umladung der benötigten Anzahl von Artikeln zurück ins Nachschublager transportiert und wieder eingelagert.

Denkbar ist es auch, dass je nach Größe des Gesamtsystems auch mehrere

Nachschublager und auch mehrere Umladestationsbereiche vorgesehen sind, die über zusätzliche Sorter, wie Taschensorter, miteinander verbunden sind, um jeweils den entsprechend ausgelegten Pufferspeicher zu versorgen.

Vorzugsweise werden, dann aber trotzdem möglichst alle Artikel eines Auftrags aus demselben Nachschublager breitgestellt.

Die Artikelidentifikationseinrichtung(en) ist vorzugsweise eine Sensorik, die Barcodes, RFID etc. ausliest oder eine Bilderkennung mittels Kamera, um die Artikel bzw. Hängefördermittel und somit indirekt die Artikel zu erkennen. Alternativ kann auch eine Nachverfolgung der Position eines Artikels über ein zugewiesenes Fenster in der Fördertechnik beim Einschleusen an der Umladestation erfolgen.

Wenn die Artikelidentifikationseinrichtung zusätzlich auch am Eingang angeordnet ist, können Artikel identifiziert und die Weiche auf einfache Weise ansteuert werden, um die Artikel der Gesamtliste in den jeweiligen Umlaufspeicher einzuschleusen.

Vorzugsweise sind je eine Weiche mit je einer Artikelidentifikationseinrichtung am Eingang und am Ausgang jedes Umlaufspeichers vorgesehen, die mit der zentralen Steuerung verbunden sind.

Der Pufferspeicher wird je nach Bedarf der Gesamtanlage mit einer Mehrzahl von Umlaufspeichern ausgestaltet. Meist liegt die Anzahl der Umlaufspeicher zwischen 4 und 20. Die Umlaufspeicher selbst haben vorzugsweise eine Kapazität von 50 - 400 Hängetaschen.

Die Umlaufspeicher haben jeweils einen gesonderten Antrieb und sind unabhängig voneinander und den zuführenden bzw. abführenden Hängeförderstrecken antreibbar gesteuert.

Hinter der Ausschleusung können Packstationen nachgelagert sein, um die Aufträge für den Versand fertigzustellen. Diese können an einer zentralen Hängeförderausschleusstrecke angeordnet sein oder über gesonderte Förderstufen erreichbar sein.

Zur Erfüllung des verbleibenden (ursprünglichen) Auftrags werden fehlende Artikel wieder auf die Gesamtliste gesetzt und über das Nachschublager nachgeliefert. Dies ist aufgrund dessen Ausgestaltung innerhalb kurzer Zeit (max. 15 Minuten) möglich.

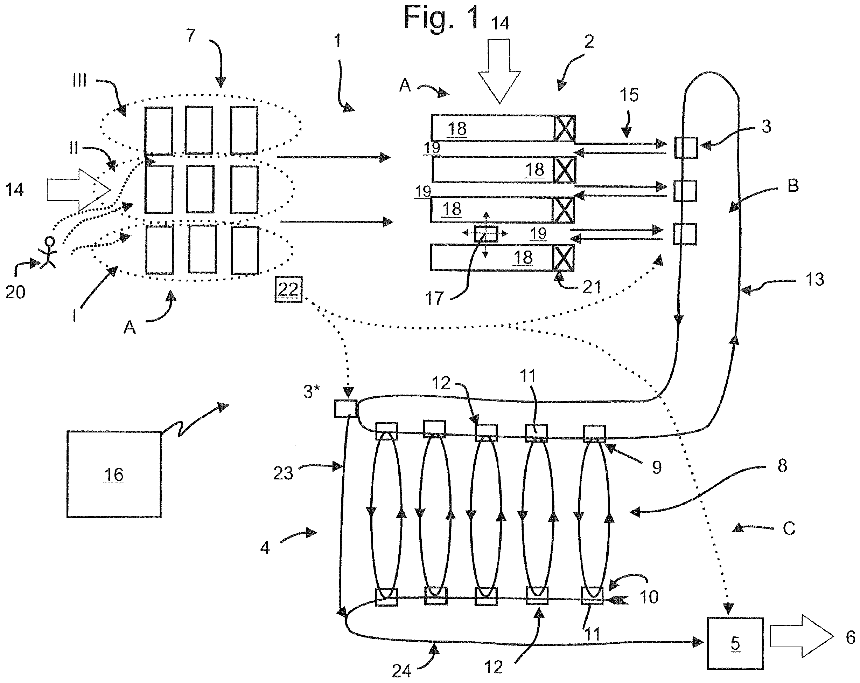

Weitere Details der Erfindung ergeben sich aus der nachfolgenden Beschreibung von Ausführungsbeispielen anhand der Zeichnung, in der
- Fig. 1: eine schematische Ansicht des Systems zur Abarbeitung einer Vielzahl von Kommissionieraufträgen nach der Erfindung;

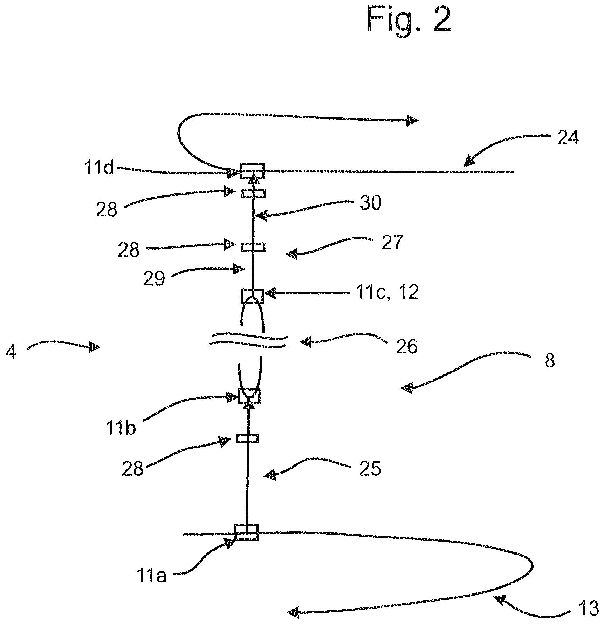

- Fig. 2: eine detailliertere Ansicht des Auslagerbereichs aus einem Umlaufspeicher und
- Fig. 3: ein Ablaufdiagramm des Materialflusses in dem System nach der Erfindung zeigen.

In den Figuren ist ein insgesamt mit 1 bezeichnetes System zur Abarbeitung einer Vielzahl von Kommissionieraufträgen mit mehreren Artikeln gezeigt.

Das System umfasst generell einen Lagerbereich A mit einem automatischen Behälter-Nachschublager 2 und einem manuellen zentralen Lager 7, einen daran anschließenden Umladebereich B mit einer Mehrzahl von Umladestationen 3 zur Umladung von Artikeln aus den Behältern für den hängenden Transport in Hängefördertaschen, einen dadurch versorgten Speicherbereich C mit einem Pufferspeicher 4 mit Umlaufspeichern 8 für die Hängefördertaschen und einen daran anschließenden Packbereich 5 mit einer Mehrzahl von Packstationen und einem Versandbereich 6.

Das manuelle zentrale Lager 7 wird zur Versorgung des Nachschublagers 2 mit gemischten Behältern verwendet. Es besteht aus Fachbodenregalen, die durch Gassen voneinander getrennt sind, durch die mehrere Kommissionierer 20 hindurchlaufen und auf mitgeführten Wagen Artikel aus den Fächern in Behälter auf dem Wagen kommissionieren. Die Kommissionierer werden dabei von Einrichtungen geleitet, wie Pick-to-voice oder pick-to-light oder manuellen Auftragslisten etc.

Im Lager 7 füllen die Kommissionierer 20 manuell auftragsorientiert Behälter gemischt mit unterschiedlichen Artikeln mehrerer Aufträge, indem sie sich durch ihre jeweilige Zone I, II, III bewegen und dabei die zugewiesenen Artikellisten abarbeiten. Die jeweils zugeteilten Artikel stammen entweder aus Einzelartikelaufträgen oder Aufträgen, die gemeinsam innerhalb von jeweils ca. 15-min-Slots zur Abarbeitung im Umlaufspeicher 8 vorgesehen sind. Dazu bewegen sich die mehreren Kommissionierer 20 parallel durch das zentrale Lager 7 und befüllen in ihrer Zone I, II, III jeweils mitgeführte Behälter mit Artikeln unterschiedlicher Aufträge, die jeweils einem Slot oder Zeitabschnitt einer vorgesehenen Abarbeitungszeit (ca. 1h in der Zukunft) zugeteilt sind. Die so entstandenen gemischten Behälter sind über alle Zonen und Kommissionierer nach den 15 min. Zeitabschnitten gruppiert, um in diesem Zeitraum bereitzustellende Aufträge gemeinsam zu komplettieren.

Die Behälter werden von den Kommissionierern auf einem Wagen mitgeführt, der dann nach Beendigung des Laufs entladen wird, wobei die Behälter über eine geeignete Station und Fördertechnik in das Nachschublager 2 eingeschleust werden.

Diese gemischten Behälter werden, im Gegensatz zu artikelreinen Behältern, immer in den Umladestationen komplett geleert bzw. umgeladen und gelangen über einen Kreislauf entweder zurück ins zentrale Lager und/oder zum Wareneingangsbereich zur Wiederverwendung.

Das Nachschublager 2 wird mit artikelreinen Behältern aus einem Wareneingangsbereich 14 versorgt und mit gemischten Behältern aus dem zentralen Lager 7. Selbst versorgt es eine Mehrzahl von Umladestationen 3 mit Behältern zur Umladung der Artikel aus den Behältern in Hängefördertaschen für den hängenden Transport. Dazu ist jede Umladestation 3 jeweils mit einer Gasse des Nachschublagers über Ein- und Auslagerförderer 15 verbunden.

Das Nachschublager 2 ist ein mehrgassen und mehrebenen Regallager, das mittels Einebenenregalbediengeräten, so genannten Shuttles 17, betrieben wird, die die Lagerplätze in den Regalen 18 von den Gassen 19 aus mit Behältern ver- und entsorgen. Die Behälter können dann über Lifte 21 und daran angeschlossene Förderer 15 an die bzw. von den Umladestationen 3 transportiert werden. Dabei ist jede Gasse an eine Umladestation 3 angebunden.

Der mit den Umladestationen 3 über eine Hängeförderschleife 13 verbundene Pufferspeicher 4 umfasst eine Vielzahl von parallelen Umlaufspeichern 8 für die Hängetransportmittel.

Die Umladestationen 3 sind manuelle oder automatische Stationen, in denen die Artikel aus den Behältern in Hängefördertaschen einzeln umgeladen werden. Dazu werden die aufgehängten Hängefördertaschen geöffnet bereitgestellt, so dass Artikel manuell oder automatisiert hineingegeben werden können.

Die Umladestationen 3 versorgen somit über die Hängeförderschleife 13 den Pufferspeicher 4 mit den mit Artikeln einzeln gefüllten Hängefördertaschen, wo sie in parallelen Umlaufspeichern 8 bis zur Vervollständigung der Artikel des jeweiligen Auftrags gespeichert werden, um dann über eine Sammelstrecke 24 an einen Packbereich 5 transportiert zu werden, um dort auftragsrein in Versandbehälter umgepackt zu werden. Von dort gelangen die Aufträge bzw. Versandbehälter letztendlich zu einem Versandbereich 6. Es versteht sich, dass ein Leer-Taschenrücklauf aus dem Versandbereich vorhanden ist, der nicht gezeigt ist. Beim Einlasten der gefüllten Hängefördertaschen an den Umladestationen 3 in die Hängeförderschleife 13 werden diese über zugewiesene Fenster nachverfolgt.

Von der Hängeförderschleife 13 im Pufferspeicher 4 werden die Hängefördertaschen über Weichen 11 in die jeweiligen Umlaufspeicher 8 gesteuert eingeschleust. Jeder Umlaufspeicher 8 besteht aus einem Einschleusförderer 25, der an der eingangsseitigen Weiche 11a angeschlossen ist und über den neue Hängefördertaschen eingelagert werden, wenn das zugewiesene Fenster dort angelangt. Im Einschleusförderer 25 ist noch ein Stopper 28 vorgesehen, so dass gezielt auf einen freien Platz in den daran sich anschließenden rotierenden Umlauförderer 26 die Hängefördertaschen gepuffert werden können. Entsprechend ist an der Schnittstelle zwischen Einschleusförderer 25 und Umlaufförderer 26 eine weitere gesteuerte Weiche 11b vorgesehen. Analog zum Einschleusförderer 25 ist ein Ausschleusförderer 27 am Ausgang des Umlaufförderers 26 vorgesehen, um benötigte Hängefördertaschen aus dem Umlaufspeicher 8 auszulagern. Entsprechend ist an der Schnittstelle zwischen Ausschleusförderer 27 und Umlaufförderer 26 eine Artikelidentifikationseinrichtung 12 sowie eine weitere gesteuerte Weiche 11c vorgesehen, um gezielt die gewünschte Hängefördertasche auf den Ausschleusförderer 27 auszuschleusen. Der Ausschleusförderer 27 weist zwei durch Stopper 28 getrennte Bereiche 29, 30 auf, bevor er über eine weitere Weiche 11d in die Sammelstrecke 24 mündet. Der erste Bereich 29 ist ein Reservebereich um eine kontinuierliche Bewegung der Hängefördertaschen zu erreichen. Der zweite Bereich 30 ist ein Sammelbereich zum Gruppieren von Hängefördertaschen.

Vorzugsweise liegen der Einschleusförderer 25 und der Ausschleusförderer 27 an gegenüberliegenden Seiten des Umlauförderers 26. In einem Umlaufspeicher 8 besteht ein selektiver Zugriff auf jede einzelne Hängefördertasche (kein FiFo).

Einzelaufträge 22, also solche Aufträge, die nur einen einzelnen Artikel umfassen, können gesondert behandelt werden, um das Gesamtsystem nicht auszubremsen. Dies ist durch gestrichelte Pfeile angedeutet. So können solche Einzelaufträge direkt vom Lager 7 zu den Umladestationen 3 transportiert werden. Denkbar ist auch der direkte Transport zum Packbereich 5 oder einer dedizierten Umladestation 3*, die einen Bypass 23 versorgt, der direkt in die Sammelstrecke 24 unter Umgehung des Puffers 4 führt. An der Umladestation 3* bzw. deren Weiche 11 können auch von den normalen Umladestationen 3 in der Förderschleife 13 stammende Einzelaufträge in den Bypass 23 gezielt ausgeschleust werden.

Das gesamte System 1 und seine Bereiche sowie alle darin befindlichen Anlagen und Einrichtungen werden von einer zentralen Steuerung 16 gesteuert.

Die Steuerung 16 ist eingerichtet, um jedem Umlaufspeicher 8 eine Vielzahl von zu kommissionierenden Aufträgen zuzuordnen und eine Gesamtliste aller Artikel und deren Menge je Umlaufspeicher 8 aus diesen Aufträgen zu erstellen und die darin enthaltenen Artikel anhand der Gesamtliste dem jeweiligen Umlaufspeicher 8 zuzuführen, wobei die Hängefördertaschen über die jeweilige Weiche 11 in den jeweiligen Umlaufspeicher 8 eingeschleust werden.

Die Steuerung 16 verteilt also aufgrund der eingehenden Aufträge die Aufträge und somit Artikel auf bestimmte Umlaufspeicher 8, woraus Gesamtlisten generiert werden, die die Bereitstellung der Artikel aus dem Nachschublager 2 an den Umladestationen 3 und schließlich der Einschleusung der Artikel nach der Gesamtliste in die Umlaufspeicher 8 steuert. Damit einher geht auch die Versorgung des Nachschublagers 2 mit gemischten Behältern aus dem zentralen Lager 7 und artikelreinen Behältern über den Wareneingangsbereich 14.

Dabei ist die Steuerung 16 eingerichtet, um regelmäßig jeden Umlaufspeicher 8 nach dem Einschleusen eines neuen Artikels mit Hilfe der Artikelidentifikationseinrichtung 12 am Ausgang des Umlaufförderers 26 daraufhin zu überprüfen, ob alle Artikel zur Erfüllung eines ursprünglichen Auftrags von der Gesamtliste enthalten sind und daraufhin die Weiche 11c mit Hilfe der dortigen Artikelidentifikationseinrichtung 12 zur Ausschleusung der Artikel des Auftrags anzusteuern, der somit dann auf den Ausschleusförderer 27 und später auf die Sammelstrecke 24 zur Zuführung zum Packbereich 5 gelangt.

Dabei ist die Steuerung 16 ebenfalls eingerichtet, um regelmäßig jeden Umlaufspeicher 8 nach dem Einschleusen eines neuen Artikels mit Hilfe der Artikelidentifikationseinrichtung 12 am Ausgang des Umlaufförderers 26 daraufhin zu überprüfen, ob alle Artikel zur Erfüllung eines vorzuziehenden anderen Auftrags bereits im jeweiligen Umlaufspeicher 8 enthalten sind und daraufhin die Weiche 11c mit Hilfe der dortigen Artikelidentifikationseinrichtung 12 zur Ausschleusung der Artikel dieses anderen Auftrags anzusteuern, der somit dann auf den Ausschleusförderer 27 und später auf die Sammelstrecke 24 zur Zuführung zum Packbereich 5 gelangt.

Es wird dabei auch geprüft, ob alle Artikel zur Erfüllung eines vorzuziehenden anderen Auftrags bereits in zwei oder mehr Umlaufspeichern 8 verteilt enthalten sind und daraufhin die Weichen 11c der jeweiligen Umlaufspeicher 8 mit Hilfe der dortigen Artikelidentifikationseinrichtungen 12 zur Ausschleusung der Artikel dieses anderen Auftrags auf die Sammelstrecke 24 zur Zuführung zum Packbereich 5 anzusteuern. Die Artikel stammen dann aus mehr als einem Umlaufspeicher 8.

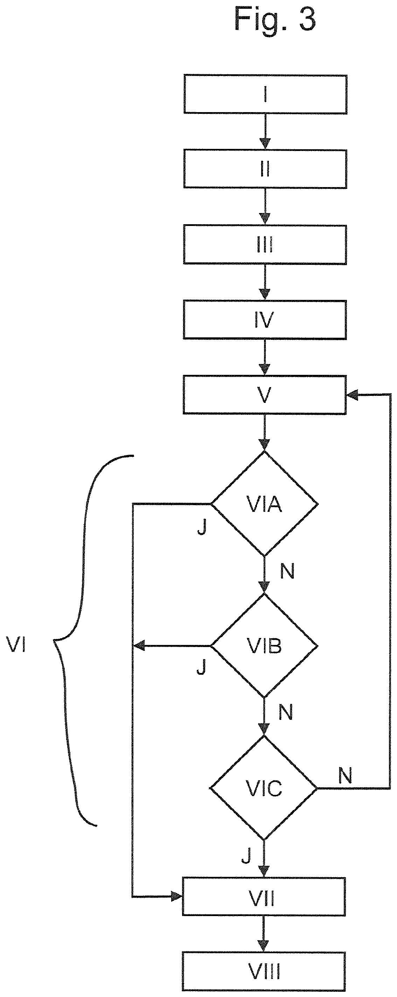

Diese Vorgehensweise erlaubt es, neue eilige Expressaufträge mit höherer Priorität vorzuziehen, also früher zu behandeln. Fehlende Artikel für den ursprünglichen Auftrag werden dann wieder auf die Gesamtliste gesetzt und innerhalb der 15 min. nachgeliefert. Anhand des Flussdiagrams der Figur 3 wird diese Vorgehensweise nochmals generell erläutert.

Zunächst werden eine Vielzahl von Aufträgen im System eingelastet, die z. B. aus einem e-commerce Bestellsystem stammen (Schritt I).

Diese Aufträge werden auf die Umlaufspeicher 8 verteilt (Schritt II) und daraus über die in den Aufträgen enthaltene Vielzahl von Artikeln eine Gesamtliste der Artikel für jeden Umlaufspeicher 8 erzeugt (Schritt III).

Mittels dieser Liste wird das restliche System gesteuert, um die Artikel dem jeweiligen Umlaufspeicher 8 rechtzeitig zuzuführen (Schritt IV).

Jeder Umlaufspeicher 8 fordert quasi die Artikel der Gesamtliste an, die von der Steuerung 16 gesteuert bereitgestellt werden, beginnend mit der Versorgung des Nachschublagers 2 aus dem Wareneingangsbereich 14 bzw. zentralen Lager 7, der Auslagerung der entsprechenden Behälter und Umladung in den Umladestationen 3 und Förderung an den Eingang 9 der jeweiligen Umlaufspeicher 8 (Schritt V).

Nach dem Einschleusen einer Hängefördertasche über die Weiche 11a am Eingang und den Einschleusförderer 25 und der Weiche 11b wird im jeweiligen Umlaufförderer 26 des Umlaufspeichers 8 mittels der Steuerung 16 regelmäßig mit Hilfe der Artikelidentifikationseinrichtung 12 an der Weiche 11c geprüft, ob somit alle Artikel zur Erfüllung eines Auftrags vorliegen (Schritt VI bzw. VIC).

Ist dies nicht der Fall, werden weitere Artikel abgewartet.

Liegen jedoch alle Artikel bzw. Hängefördertaschen zur Erfüllung eines Auftrags vor, werden diese über die Weiche 11c auf den Ausschleusförderer und über die Weiche 11d auf die Sammelstrecke 24 ausgeschleust (Schritt VII), um zum Packbereich 5 gefördert zu werden (Schritt VIII). Ggf. werden die Stopper 28 an den Bereichen 29 und 30 eingesetzt.

Es versteht sich, dass im Rahmen der Erfindung, ein "fertiger" Auftrag in diesem Sinne auch ein neuer Auftrag mit höherer Priorität sein kann, der somit vorzuziehen ist. Auch dies wird im Schritt VI bzw. Unterschritt VIA mitgeprüft. Ebenso wird geprüft, ob ein neuer Auftrag mit höherer Priorität erfüllt werden kann, wenn andere Umlaufspeicherinhalte berücksichtigt werden (Schritt VIB).

### Bezugszeichenliste

- 1: System
- 2: Nachschublager
- 3: Umladestation
- 4: Pufferspeicher
- 5: Packbereich
- 6: Versandbereich
- 7: zentrales Lager
- 8: Umlaufspeicher
- 9: Eingang
- 10: Ausgang
- 11: Weiche
- 12: Artikelidentifikationseinrichtung
- 13: Hängeförderschleife
- 14: Wareneingangsbereich
- 15: Ein- und Auslagerförderer
- 16: Steuerung
- 17: Shuttle
- 18: Regal
- 19: Gasse
- 20: Kommissionierer
- 21: Lift
- 22: Einzelartikel/Einzelauftrag
- 23: Bypass
- 24: Sammelstrecke
- 25: Einschleusförderer
- 26: Umlaufförderer
- 27: Ausschleusförderer
- 28: Stopper
- 29: erster Bereich
- 30: zweiter Bereich
- A: Lagerbereich
- B: Umladebereich
- C: Speicherbereich
- I, II, III: Zone

## Patentansprüche

1. System (1) zur Abarbeitung einer Vielzahl von Kommissionieraufträgen mit jeweils mehreren Artikeln
mit einem Nachschublager (2) für Artikel,
mit mindestens einer mit dem Nachschublager verbundenen Umladestation (3) zur Umladung von Artikeln für den hängenden Transport,
mit einem mit der mindestens einen Umladestation (3) verbundenen Pufferspeicher (4) umfassend eine Vielzahl von parallelen Umlaufspeichern (8) für die Hängetransportmittel, wobei am Eingang (9) und am Ausgang (10) jedes Umlaufspeichers (8) jeweils eine Weiche (11) und am Ausgang je eine Artikelidentifikationseinrichtung (12) angeordnet ist, und
mit einer zentralen Steuerung (16), die eingerichtet ist, jedem Umlaufspeicher (8) eine Vielzahl von zu kommissionierenden Aufträgen zuzuordnen und eine Gesamtliste aller Artikel und deren Menge je Umlaufspeicher (8) aus diesen Aufträgen zu erstellen und die darin enthaltenen Artikel anhand der Gesamtliste dem jeweiligen Umlaufspeicher (8) zuzuführen, wobei die Hängetransportmittel über eine Weiche (11) in den jeweiligen Umlaufspeicher (8) eingeschleust werden,
wobei die Steuerung (16) eingerichtet ist, um regelmäßig jeden Umlaufspeicher (8) daraufhin zu überprüfen, ob a) alle Artikel zur Erfüllung eines ursprünglichen Auftrags enthalten sind und daraufhin die Weiche (11) am Ausgang (10) mit Hilfe der dortigen Artikelidentifikationseinrichtung (12) zur Ausschleusung der Artikel des Auftrags ansteuert, und ob b) alle Artikel zur Erfüllung eines vorzuziehenden anderen Auftrags bereits im Umlaufspeicher (8) enthalten sind und daraufhin die Weiche (11) am Ausgang (10) mit Hilfe der dortigen Artikelidentifikationseinrichtung (12) zur Ausschleusung der Artikel dieses anderen Auftrags ansteuert und ob c) alle Artikel zur Erfüllung eines vorzuziehenden anderen Auftrags bereits in zwei oder mehr Umlaufspeicher (8) verteilt enthalten sind und daraufhin die Weichen (11) am Ausgang (10) der jeweiligen Umlaufspeicher (8) mit Hilfe der dortigen Artikelidentifikationseinrichtungen (12) zur Ausschleusung der Artikel dieses anderen Auftrags ansteuert.

2. System nach Anspruch 1, **dadurch gekennzeichnet, dass** die zentrale Steuerung (16) eingerichtet ist, Artikel erfüllter bzw. ausgeschleuster Aufträge von der Gesamtliste des jeweiligen Umlaufspeichers (8) zu streichen.

3. System nach Anspruch 1 oder 2, **dadurch gekennzeichnet, dass** die zentrale Steuerung (16) eingerichtet ist, Aufträge bei der Abarbeitung vorzuziehen, die eine höhere oder heraufgesetzte Priorität besitzen.

4. System nach einem der vorhergehenden Ansprüche, **dadurch gekennzeichnet, dass** der vorzuziehende andere Auftrag nicht auf der ursprünglichen Gesamtliste enthalten ist.

5. System nach einem der vorhergehenden Ansprüche, **dadurch gekennzeichnet, dass** die zentrale Steuerung (16) eingerichtet ist, den Umlaufspeicher (8) beim Einschleusen von Artikeln regelmäßig zu überprüfen.

6. System nach einem der vorhergehenden Ansprüche, **dadurch gekennzeichnet, dass** das Nachschublager (2) ein Shuttle-Lager ist.

7. System nach einem der vorhergehenden Ansprüche, **dadurch gekennzeichnet, dass** das Nachschublager (2) mit Mini-Batches gefüttert wird.

8. Verfahren zur Abarbeitung einer Vielzahl von Kommissionieraufträgen mit mehreren Artikeln, wobei aus einem Nachschublager (2) für Artikel mindestens eine mit dem Nachschublager (2) verbundene Umladestation (3) zur Umladung von Artikeln für den hängenden Transport versorgt wird und in mit einem mit der mindestens einen Umladestation (3) verbundenen Pufferspeicher (4) mit einer Vielzahl von parallelen Umlaufspeichern (8) die Hängetransportmittel zwischengespeichert werden, wobei mittels je einer Weiche (11) am Eingang und am Ausgang jedes Umlaufspeichers (8) eine zentrale Steuerung (16) verbunden ist, die jedem Umlaufspeicher (8) eine Vielzahl von zu kommissionierenden Aufträgen zuordnet und eine Gesamtliste aller Artikel und deren Menge je Umlaufspeicher (8) aus diesen Aufträgen erstellt und die die Weiche (11) am Eingang (9) zur Einschleusung der zugeordneten Artikel der Gesamtliste in den jeweiligen Umlaufspeicher (8) ansteuert,
und die Steuerung (16) regelmäßig jeden Umlaufspeicher daraufhin überprüft, ob a) alle Artikel zur Erfüllung eines ursprünglichen Auftrags enthalten sind und daraufhin die Weiche (11) am Ausgang (10) mit Hilfe der dortigen Artikelidentifikationseinrichtung (12) zur Ausschleusung der Artikel des Auftrags ansteuert, und b) alle Artikel zur Erfüllung eines vorzuziehenden anderen Auftrags bereits im Umlaufspeicher (8) enthalten sind und daraufhin die Weiche (11) am Ausgang (10) mit Hilfe der dortigen Artikelidentifikationseinrichtung (12) zur Ausschleusung der Artikel dieses anderen Auftrags ansteuert, und c) alle Artikel zur Erfüllung eines vorzuziehenden anderen Auftrags bereits in zwei oder mehr Umlaufspeicher (8) verteilt enthalten sind und daraufhin die Weichen (11) am Ausgang der jeweiligen Umlaufspeicher (8) mit Hilfe der dortigen Artikelidentifikationseinrichtungen (12) zur Ausschleusung der Artikel dieses anderen Auftrags ansteuert.

## Claims

1. System (1) for processing a multiplicity of picking orders each with a plurality of articles
having a replenishing storage (2) for articles,
having at least one reloading station (3) connected to the replenishing storage for reloading of articles for hanging transportation,
having a buffer storage (4) connected to the at least one reloading station (3) and comprising a multiplicity of parallel circulating storages (8) for the hanging transport means, wherein at the intake (9) and at the output (10) of each circulating storage (8) a respective switch (11) is disposed and at the output a respective article identification device (12) is disposed, and
having a central controller (16) arranged to allocate a multiplicity of orders to be picked to each circulating storage (8) and to draw up from these orders an overall list of all articles and the quantity thereof per circulating storage (8) and to supply the articles present therein to the respective circulating storage (8) with the aid of the overall list, wherein the hanging transport means are introduced via a switch (11) into the respective circulating storage (8),
wherein the controller (16) is arranged to regularly check each circulating storage (8) to determine whether a) all articles for the fulfilment of an original order are present, and thereupon actuates the switch (11) at the output (10) with the aid of the article identification device (12) located there in order to discharge the articles of the order, and b) all articles for the fulfilment of another order to be treated preferentially are already present in the circulating storage, and thereupon actuates the switch (11) at the output (10) with the aid of the article identification device (12) located there to discharge the articles of this other order and c) all articles for the fulfilment of another order to be treated preferentially are already present, distributed into two or more circulating storages (8), and thereupon actuates the switches (11) at the output (10) of the respective circulating storage (8) with the aid of the article identification devices (12) located there to discharge the articles of this other order.

2. System as claimed in claim 1, **characterised in that** the central controller (16) is arranged to delete articles of fulfilled or discharged orders from the overall list of the respective circulating storage (8).

3. System as claimed in claim 1 or 2, **characterised in that** the central controller (16) is arranged to preferentially treat orders during processing which have a higher or raised priority.

4. System as claimed in any one of the preceding claims, **characterised in that** the other order to be treated preferentially is not present on the original overall list.

5. System as claimed in any one of the preceding claims, **characterised in that** the central controller (16) is arranged to regularly check the circulating storage (8) during the introduction of articles.

6. System as claimed in any one of the preceding claims, **characterised in that** the replenishing storage (2) is a shuttle storage.

7. System as claimed in any one of the preceding claims, **characterised in that** the replenishing storage (2) is supplied with mini-batches.

8. Method for processing a multiplicity of picking orders with a plurality of articles, wherein, from a replenishing storage (2) for articles, at least one reloading station (3) connected to the replenishing storage (2) is supplied for the reloading of articles for hanging transportation and the hanging transport means are intermediately stored with a buffer storage (4) connected to the at least one reloading station (3) and having a multiplicity of parallel circulating storages (8), wherein a central controller is connected by means of a respective switch (11) at the intake and at the output of each circulating storage (8), which central controller (16) allocates to each circulating storage (8) a multiplicity of orders to be picked and draws up an overall list of all articles and the quantity thereof per circulating storage (8) from these orders and which actuates the switch (11) at the intake (9) for introduction of the allocated articles of the overall list into the respective circulating storage (8),
and the controller (16) regularly checks each circulating storage to determine whether a) all articles for the fulfilment of an original order are present, and thereupon actuates the switch (11) at the output (10) with the aid of the article identification device (12) located there in order to discharge the articles of the order, and b) all articles for the fulfilment of another order to be treated preferentially are already present in the circulating storage (8), and thereupon actuates the switch (11) at the output (10) with the aid of the article identification device (12) located there to discharge the articles of this other order and c) all articles for the fulfilment of another order to be treated preferentially are already present, distributed into two or more circulating storages (8), and thereupon actuates the switches (11) at the output of the respective circulating storage (8) with the aid of the article identification devices (12) located there to discharge the articles of this other order.

## Revendications

1. Système (1) de traitement d'une pluralité de commandes de préparation ayant chacune plusieurs articles
comprenant un support (2) d'avancement d'articles,
comprenant, relié au support d'avancement, un poste (3) de transbordement pour le transbordement d'articles pour le transport suspendu,
comprenant, relié au au moins un poste (3) de transbordement, un accumulateur (4) de tampon comprenant une pluralité d'accumulateurs (8) tournants parallèles pour les moyens de transport suspendu, dans lequel à l'entrée (9) et à la sortie (10) de chaque accumulateur (8) circulant est disposé respectivement un aiguillage (11) et à la sortie, respectivement, un dispositif (12) d'identification d'articles et
comprenant une commande (16) centrale, qui est agencée pour affecter une pluralité de commandes de préparation à chaque accumulateur (8) tournant et pour dresser, à partir de ces commandes, une liste d'ensemble de tous les articles et de leurs quantités par accumulateur (8) tournant et pour envoyer les articles, qui y sont contenus, à l'aide de la liste d'ensemble à l'accumulateur (8) tournant respectif, dans lequel les moyens de transport suspendu sont entrés par un aiguillage (11) dans l'accumulateur (8) tournant respectif,
dans lequel la commande (16) est agencée pour contrôler régulièrement chaque accumulateur (8) tournant sur le point de savoir si a) tous les articles pour satisfaire une commande d'origine sont contenus et ensuite l'aiguillage (11) est commandé à la sortie (10), à l'aide du dispositif (12) d'identification d'articles, qui s'y trouve, pour faire sortir l'article de la commande et si b) tous les articles pour satisfaire une autre commande précédente, sont déjà contenus dans l'accumulateur (8) tournant et ensuite, commander l'aiguillage (11) à la sortie (10) à l'aide du dispositif (12) d'authentification, qui s'y trouve, pour faire sortir les articles de cette autre commande et si c) tous les articles pour satisfaire une autre commande précédente sont contenus en étant répartis déjà dans deux ou plusieurs accumulateurs (8) tournants et ensuite commander l'aiguillage (11) à la sortie (10) de l'accumulateur (8) tournant respectif à l'aide des dispositifs (12) d'identification d'articles, qui s'y trouvent, pour faire sortir les articles de cette autre commande.

2. Système suivant la revendication 1, **caractérisé en ce que** la commande (16) centrale est agencée pour barrer des articles de commandes satisfaites ou sorties de la liste d'ensemble des accumulateurs (8) tournants respectifs.

3. Système suivant la revendication 1 ou 2, **caractérisé en ce que** la commande (16) centrale est agencée pour préférer, lors du traitement, des commandes, qui ont une priorité plus grande ou mise en exergue.

4. Système suivant l'une des revendications précédentes, **caractérisé en ce que** l'autre commande précédente n'est pas contenue dans la liste d'ensemble d'origine.

5. Système suivant l'une des revendications précédentes, **caractérisé en ce que** la commande (16) centrale est agencée pour contrôler régulièrement l'accumulateur (8) tournant lors de l'entrée d'articles.

6. Système suivant l'une des revendications précédentes, **caractérisé en ce que** le support (2) d'avancement est un support à navette.

7. Système suivant l'une des revendications précédentes, **caractérisé en ce que** le support (2) d'avancement est alimenté en mini lots.

8. Procédé de traitement d'une pluralité de commandes de préparation ayant plusieurs articles, dans lequel, à partir d'un support (2) d'avancement d'articles, on alimente au moins un poste (3) de transbordement, relié au support (2) d'avancement, pour le transbordement d'articles pour le transport suspendu et on met les moyens de transport suspendu dans une mémoire (4) tampon, reliée au au moins un poste (3) de transbordement, ayant une pluralité d'accumulateurs (8) tournants parallèles, dans lequel, au moyen respectivement d'un aiguillage (11), à l'entrée et à la sortie de chaque accumulateur (8) tournant est reliée une commande (16) centrale, qui affecte, à chaque accumulateur (8) tournant, une pluralité de commandes à préparer et qui dresse une liste d'ensemble de tous les articles et de leurs quantités par accumulateur (8) tournant et qui commande l'aiguillage (11) à l'entrée (9) pour l'entrée des articles affectés de la liste d'ensemble dans l'accumulateur (8) tournant respectif, et la commande (16) contrôle régulièrement chaque accumulateur tournant sur le point de savoir si a) tous les articles pour satisfaire une commande d'origine sont contenus et ensuite l'aiguillage (11) est commandé à la sortie (10) à l'aide du dispositif (12) d'identification d'articles, qui s'y trouve, pour faire sortir les articles de la commande et b) tous les articles pour satisfaire une autre commande précédente sont déjà contenus dans l'accumulateur (8) tournant et ensuite, commande l'aiguillage (11) à la sortie (10) à l'aide du dispositif (12) d'authentification d'articles, qui s'y trouve, pour faire sortir les articles de cette autre commande et c) tous les articles pour satisfaire une autre commande précédente sont contenus en étant répartis déjà dans deux ou plusieurs accumulateurs (8) tournants et ensuite commande l'aiguillage (11) à la sortie de l'accumulateur (8) tournant respectif à l'aide des dispositifs (12) d'identification d'articles, qui s'y trouvent, pour faire sortir les articles de cette autre commande.
